# EUROPEAN PATENT APPLICATION

(11) **EP 2 988 460 A1**
(43) Date of publication of application: **24.02.2016**
(21) Application number: 15171246.0
(22) Date of filing: 09.06.2015
(51) Int. Cl.: H04L 12/801, H04L 12/803

(54) **TRAFFIC MANAGEMENT SYSTEM AND WIRELESS NETWORK SYSTEM**

(30) Priority: 20.08.2014 JP 2014167598
(71) Applicant: Hitachi, Ltd., Tokyo 100-8280 (JP)
(72) Inventor: HOSHIHARA, Hayato, Tokyo, 100-8280 (JP); OKITA, Hideki, Tokyo, 100-8280 (JP); TANAKA, Ryoichi, Tokyo, 100-8280 (JP); KUDOH, Seiya, Tokyo, 100-8280 (JP)
(74) Representative: MERH-IP Matias Erny Reichl Hoffmann Patentanwälte PartG mbB

(57) **Abstract**

It is provided a traffic management system 100 for managing traffic of a wireless network system, the wireless network system including at least one call control apparatus for processing a connnection request from a subscriber terminal, the traffic management system 100 being configured to predict a connection request processing completion time, which is a time required for the at least one call control apparatus to finish processing a connection request, based on a change in a slope of the connection request processing completion time in relation to a quantity of connection requests that are transferred from the subscriber terminals to the at least one call control apparatus.

## Description

### CLAIM OF PRIORITY

The present application claims priority from Japanese patent application JP 2014-167598 filed on August 20, 2014, the content of which is hereby incorporated by reference into this application.

### BACKGROUND OF THE INVENTION

This invention relates to a system for managing the traffic of a communication network.

A cellular phone communication network of a cellular phone service provider includes a plurality of network nodes. Cellular phone terminals of subscribers to the cellular phone service transmit and receive packet data to and from an external network such as the Internet via the plurality of network nodes. The cellular phone service provider strives to improve packet data communication quality that is felt by the subscribers through traffic analysis and traffic control of the cellular phone communication network.

Background art in this technical field includes JP 2010-21942 A.

Disclosed in JP 2010-21942 A is a wireless network system including a base transceiver station. The base transceiver station includes a traffic detecting unit for detecting the concentration of traffic, and a congestion prevention control unit for discarding random access channel signals, or responding that a wireless link cannot be set, when traffic detected by the traffic detecting unit exceeds a given volume, in order to prevent congestion. The traffic detecting unit detects the concentration of traffic when one of 1) the number of random access channel signals per unit time, 2) the number of call setting requests from an RNC per unit time, 3) the number of control signals from at least one of the RNC and mobile terminals per unit time, and 4) the CPU utilization ratio of the BTS exceeds a given threshold.

### SUMMARY OF THE INVENTION

Detecting a sign of congestion on a control plane of a cellular phone communication network requires taking into account the characteristics of signaling messages and the quality felt by subscribers, which makes accurate identification of a congestion sign difficult. For example, in the case of detecting a sign of congestion of a call control apparatus that is caused by coupling request messages, elements that influence traffic congestion are the coupling of subscriber terminals, re-transmission control that is executed autonomously by a relay apparatus, and the message sequence flow of messages between relay apparatus. In this situation, traffic management systems of the related art have difficulties in predicting congestion based on traffic volume and CPU load.

The representative one of inventions disclosed in this application is outlined as follows. There is provided a traffic management system for managing traffic of a wireless network system. The wireless network system includes at least one call control apparatus for processing a connection request from a subscriber terminal. The traffic management system is configured to predict a connection request processing completion time, which is a time required for the at least one call control apparatus to finish processing a connection request, based on a change in a slope of the connection request processing completion time in relation to a quantity of connection requests that are transferred from the subscriber terminals to the at least one call control apparatus.

According to the representative embodiment of this invention, the timeout of the coupling request issued by the subscriber terminal can be prevented. Other objects, configurations, and effects than those described above are revealed through the following description of embodiments.

### BRIEF DESCRIPTION OF THE DRAWINGS

The present invention can be appreciated by the description which follows in conjunction with the following figures, wherein:
FIG. 1 is a diagram for illustrating a configuration of a network of a first embodiment;
FIG. 2 is a diagram for illustrating transitions in an average Attach completion time of subscribers in relation to input rate of Attach traffic according to the first embodiment;
FIG. 3 is a diagram for illustrating a configuration example of a TMS according to the first embodiment;
FIG. 4 is a diagram for illustrating a configuration example of a user accommodating MME management table according to the first embodiment;
FIG. 5 is a diagram for illustrating a configuration example of a traffic analysis table according to the first embodiment;
FIG. 6 is a diagram for illustrating a configuration example of an MME control table according to the first embodiment;
FIG. 7 is a sequence diagram for illustrating an example of MME load prediction/control processing that is executed when input rate is less than a control threshold according to the first embodiment;
FIG. 8 is a sequence diagram for illustrating an example of MME load prediction/control processing that is executed when input rate is equal to or more than a control threshold according to the first embodiment;
FIG. 9 is a flowchart for illustrating an example of processing executed by a user accommodating MME management function according to the first embodiment;
FIG. 10 is a diagram for illustrating an example in which a traffic analyzing function predicts congestion by a slope supplementing method according to the first embodiment;
FIG. 11 is a flowchart for illustrating an example of processing executed by the traffic analyzing function with a use of a slope supplementing method according to the first embodiment;
FIG. 12 is a diagram for illustrating examples in each of which the traffic analyzing function predicts congestion by an inflection point detecting method according to the first embodiment;
FIG. 13 is a flowchart for illustrating an example of processing executed by the traffic analyzing function with the use of the inflection point detecting method according to the first embodiment;
FIG. 14 is a flowchart for illustrating an example of processing executed by a control calculation function according to the first embodiment;
FIG. 15 is a diagram for illustrating a configuration of a network according to a second embodiment;
FIG. 16 is a diagram for illustrating a configuration example of a virtual MME apparatus according to the second embodiment;
FIG. 17 is a flowchart for illustrating an example of processing executed by the virtual MME apparatus control calculation function according to the second embodiment;
FIG. 18 is a flowchart for illustrating an example of processing that is executed by a MME function adding function according to the second embodiment,;
FIG. 19 is a diagram for illustrating a configuration of a network according to a third embodiment of this invention;
FIG. 20 is a diagram for illustrating a configuration example of a virtual EPC apparatus according to the third embodiment; and
FIG. 21 is a flowchart for illustrating an example of processing executed by a virtual resource management function according to the third embodiment.

### DETAILED DESCRIPTION OF THE PREFERRED EMBODIMENTS

### First Embodiment

In a first embodiment of this invention, S1 Attach signaling messages, which are issued from cellular phone terminals of subscribers in coupling starting processing prescribed by 3GPP, are observed on a control plane of an LTE network in order to analyze a sign of congestion and, based on the result of the analysis, load is balanced among MMEs within an MME pool 104 prescribed by 3GPP, to thereby prevent congestion.

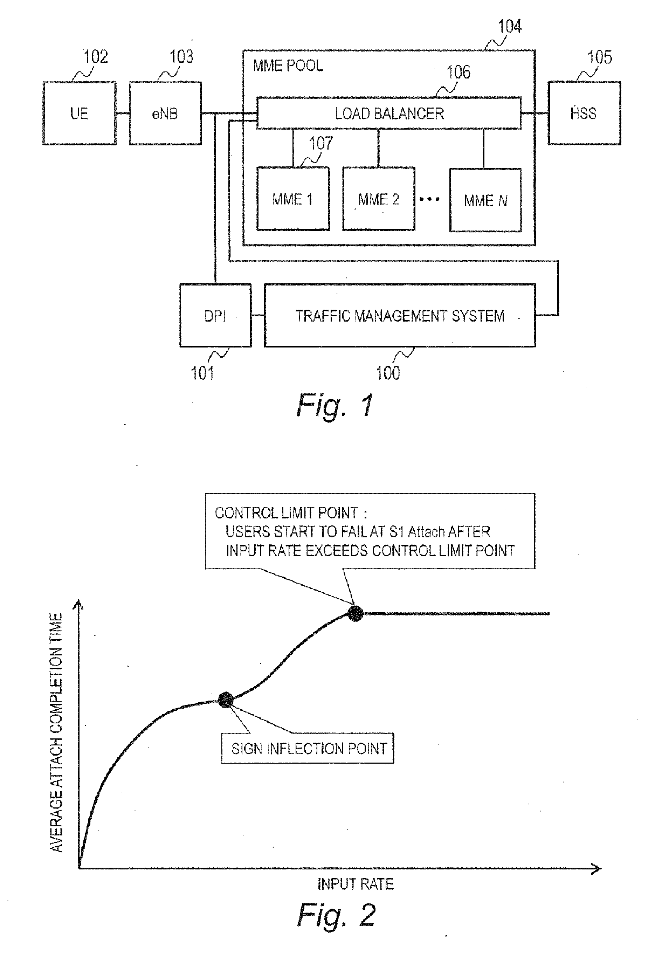

FIG. 1 is a diagram for illustrating a configuration of a network of the first embodiment.

The network of the first embodiment includes a traffic management system (TMS) 100, a deep packet inspection (DPI) unit 101, a base station (evolved NodeB: eNB) 103, the mobile management entity (MME) pool 104, and a home subscriber server (HSS) 105. The MME pool 104 includes a load balancer 106 and a plurality of MMEs 107.

The eNB 103 is a base station that accommodates at least one cellular phone terminal (user equipment: UE) 102.

The load balancer 106 receives all pieces of data on incoming traffic to the MME pool 104, and transfers the traffic by distributing the pieces of data among the MMEs 107.

The MMEs 107 are communication apparatus that accommodate at least one eNB 103 to manage and control LTE communication to and from the UE 102 accommodated by the eNB 103. The MMEs 107 manage coupling information of the UE 102 and give a coupling permission ("Attach Accept") in response to a coupling request ("Attach Request") made by the UE 102.

The MMEs 107 in the first embodiment are two or more entities all of which have the same performance, but may instead be different from one another in performance.

The HSS 105 is a database apparatus that holds subscriber information. The HSS 105 transmits subscriber information to the MMEs 107 in response to requests from the MMEs 107.

The DPI unit 101 is an analysis apparatus for analyzing packets on the network, and monitors an S1-AP interface, which couples the eNB 103 and the MMEs 107, to transmit to the TMS a control message that is obtained from the S1-AP interface.

Based on the control message that is received from the DPI unit 101, the TMS 100 analyzes Attach signaling messages, predicts transitions in congestion, detects a sign of congestion, and instructs the load balancer to balance load.

The first embodiment takes as an example a configuration in which the DPI unit 101 monitors communication between the eNB 103 and the MME pool 104 as means used by the TMS 100 to monitor the behavior of the LTE network. This configuration requires fewer monitoring points and less cost to provide and run facilities necessary for monitoring work than in the case where the DPI unit 101 monitors all base stations of the E-UTRAN.

FIG. 2 is a diagram illustrating transitions in an average Attach completion time of subscribers in relation to the congestion intensity (input rate) of Attach traffic, which are obtained through a network simulation of an EPC system.

As illustrated in FIG. 2, the degree of increase of the average Attach completion time decreases at first as the input rate rises from 0, and then starts to increase when the input rate continues to rise and reaches a certain point (hereinafter referred to as sign inflection point). When the input rate rises further and reaches a control limit point of the MMEs 107, users fail at S1 Attach. The average Attach completion time, which shifts with changes in input rate, thus has the sign inflection point and the control limit point.

The principle of this phenomenon relates to processing executed by a plurality of processing apparatus within a mobile network (for example, the MMEs 107 and the HSS 106) through which the Attach traffic passes. Those apparatus have a limit value with respect to the Attach traffic processing rate, and the Attach traffic processing rate may vary from one apparatus to another. When the input rate exceeds the Attach traffic processing rate, bursts of Attach traffic are evened out by internal buffering. Because the Attach traffic is buffered by a plurality of apparatus in this manner, the bursts are mitigated and can be processed without dropping performance as long as the excess of the input rate is within a certain degree. As a result, an average Attach response time observed by the DPI unit 101 increases gradually with a rise in input rate until the sign inflection point is reached. Once the input rate exceeds the sign inflection point, however, data on the Attach traffic that is beyond the buffer capacity is discarded and the average Attach response time becomes longer.

In the first embodiment, the sign inflection point is detected at a stage before the control limit point is reached, in order to control load on the MMEs 107 early. Specifically, load on the MMEs 107 is balanced by predicting an average Attach completion time transition curve up to the sign inflection point and setting, based on the prediction, as a threshold for a congestion sign, an input rate at which the degree of increase becomes gentler than a constant value (α) for the first time.

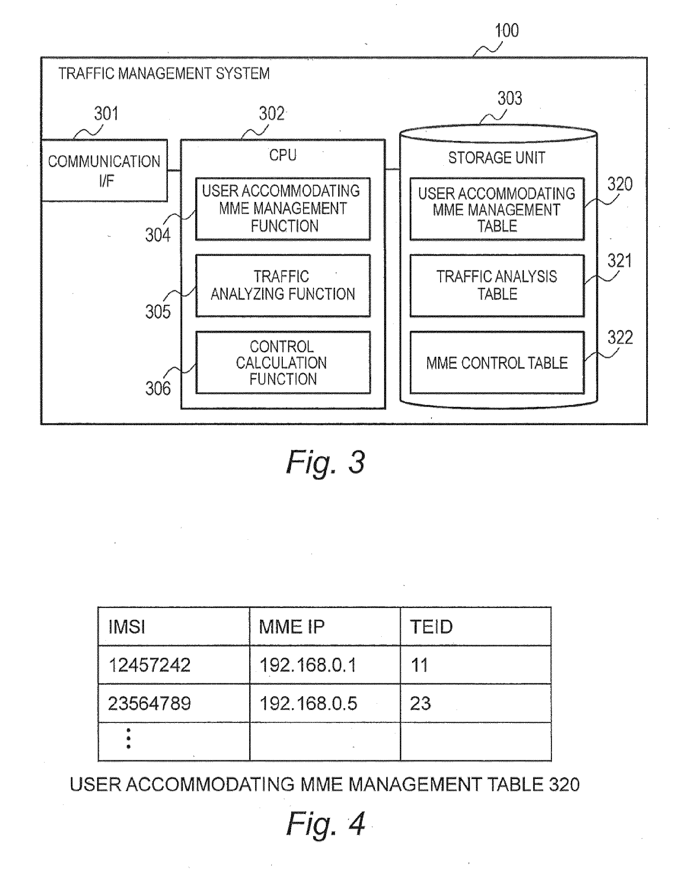

FIG. 3 is an illustration of a configuration example of the TMS 100 according to the first embodiment.

The TMS 100 is installed in a general computer, and includes a communication interface 301, a CPU 302, and a storage unit 303. The CPU 302 implements functions of the TMS 100 (a user accommodating MME management function 304, a traffic analyzing function 305, and a control calculation function 306) by executing a program that is stored in a memory.

The storage unit 303 includes a large-capacity, non-volatile storage apparatus such as a magnetic storage apparatus (HDD) or a flash memory (SSD). The storage unit 303 stores programs executed by the CPU 302 and data used when the programs are executed. In other words, the programs are read out of the storage unit 303, loaded onto the memory, and executed by the CPU 302.

The programs executed by the CPU 302 are provided to the TMS 100 via a removable medium (a CD-ROM, a flash memory, or the like), or via a network, to be stored in the storage unit 303 that is a non-transitory storage medium. It is therefore preferred for the TMS 100 to have an interface for reading data out of removable media.

The storage unit 303 also holds a user accommodating MME management table 320, a traffic analysis table 321, and an MME control table 322.

The communication interface 301 is a network interface apparatus that controls communication to and from other apparatus (the DPI unit 101, the load balancer 106, and the like) by following a given protocol.

The TMS 100 is a computer system that is built physically on a single computer, or built logically or physically on a plurality of computers. The programs described above may run on the same computer and different threads, or may run on virtual computers that are built from a plurality of physical computer resources.

The first embodiment describes a configuration in which the programs and the tables are stored in one computer. Alternatively, those programs and tables may be stored in an external storage apparatus so that data is read out of the external storage apparatus each time processing of the programs requires the data, and so that data is stored in the external storage apparatus each time the processing is completed.

The programs and data may be distributed to be stored in a plurality of computers. For example, the tables given above may be implemented as tables of a relational database to be stored in a database apparatus separate from the TMS 100 so that a program executed by the TMS 100 refers to or updates data stored in the database apparatus.

The difference in data storage method described above has no effect on the essence of this invention.

FIG. 4 is an illustration of a configuration example of the user accommodating MME management table 320.

Each entry of the user accommodating MME management table 320 includes a combination of the terminal identifier of the UE 102 (an IMSI), the IP address of one MME, and a tunnel endpoint identifier (TEID). The TMS 100 uses the user accommodating MME management table 320 in order to manage which MME controls which UE 102.

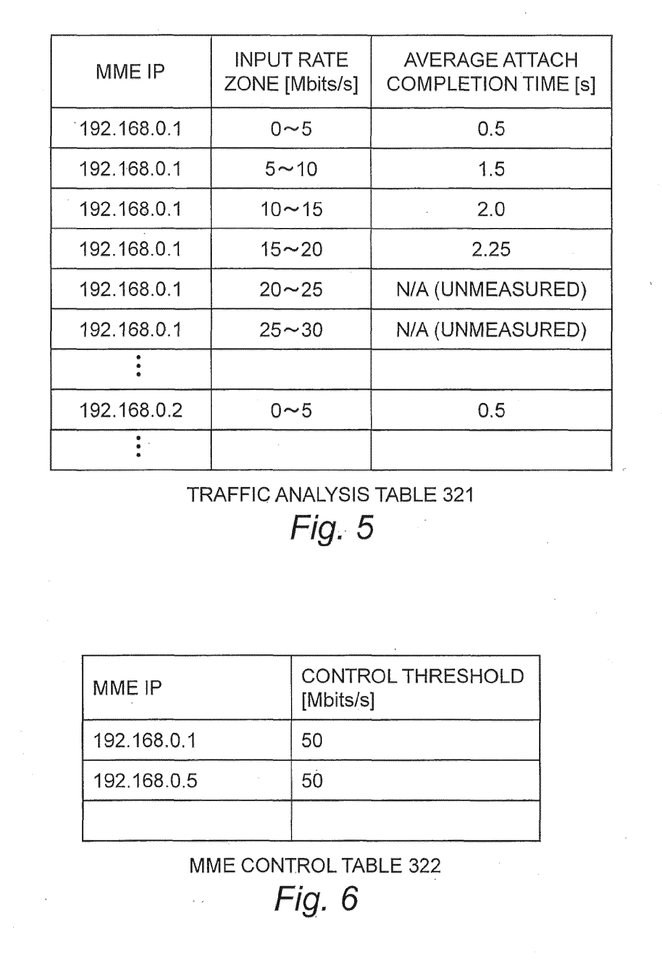

FIG. 5 is an illustration of a configuration example of the traffic analysis table 321.

Each entry of the traffic analysis table 321 includes a combination of the IP address of one MME, an input rate zone, and an average Attach completion time. The TMS 100 keeps analyzed traffic information in the traffic analysis table 321. The TMS 100 identifies each MME by the IP address.

FIG. 6 is an illustration of a configuration example of the MME control table 322.

Each entry of the MME control table 322 includes a combination of the IP address of one MME and a control input rate threshold. The TMS 100 uses the MME control table 322 to keep, for each MME, an input rate threshold that serves as a trigger for control of the MME (hereinafter referred to as control threshold).

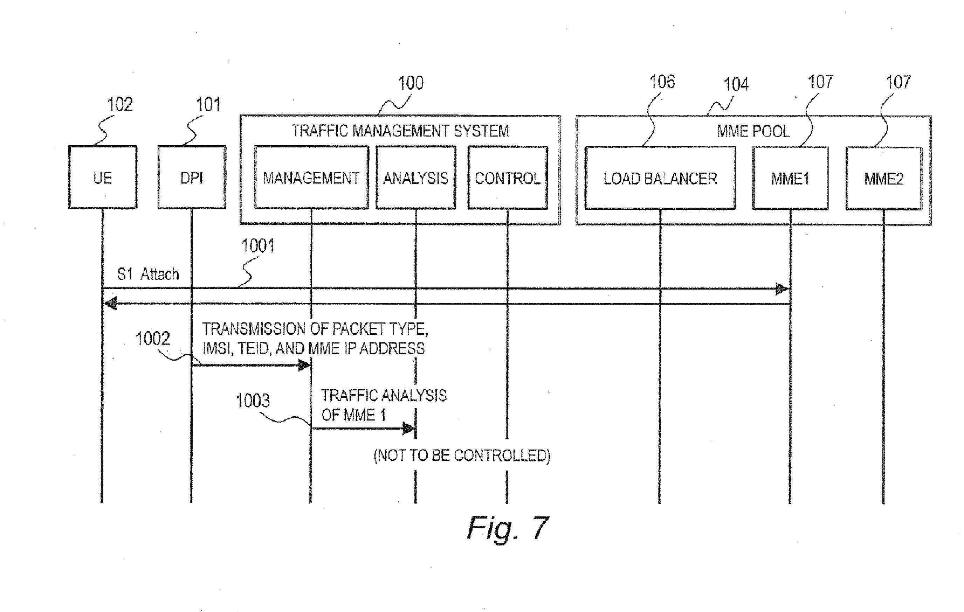

FIG. 7 is a sequence diagram for illustrating an example of MME load prediction/control processing that is executed when the input rate is less than the control threshold in the first embodiment.

Attach processing is executed between the UE 102 and an MME 1 (107) (1001). The DPI unit 101 observes messages of this Attach processing.

The DPI unit 101 transmits observed Attach messages and Detach messages to the TMS 100 (1002). Each piece of the information transferred to the TMS 100 includes a packet type, an IMSI, a TEID, and the IP address of the MME.

When receiving a transferred Attach message or Detach message, the TMS 100 activates a user accommodating MME management function. The user accommodating MME management function registers the IMSI, the TEID, and the IP address of the MME in the user accommodating MME management table 320. The user accommodating MME management function then calculates an average input rate by obtaining a compiled data amount, which is the product of the number of Attach messages per unit time multiplied by the size of the Attach messages, calculates an average value of Attach processing completion times that are associated with the Attach messages, and transmits to the traffic analyzing function a trigger for a request to analyze the traffic of the MME 1 (1003).

The traffic analyzing function accumulates information of the input rate and the session completion time as a history in the traffic analysis table 321. The traffic analyzing function also predicts transitions in traffic to set the control threshold. When the input rate is less than the control threshold, the traffic analyzing function determines that there is no congestion and that control is not to be exerted.

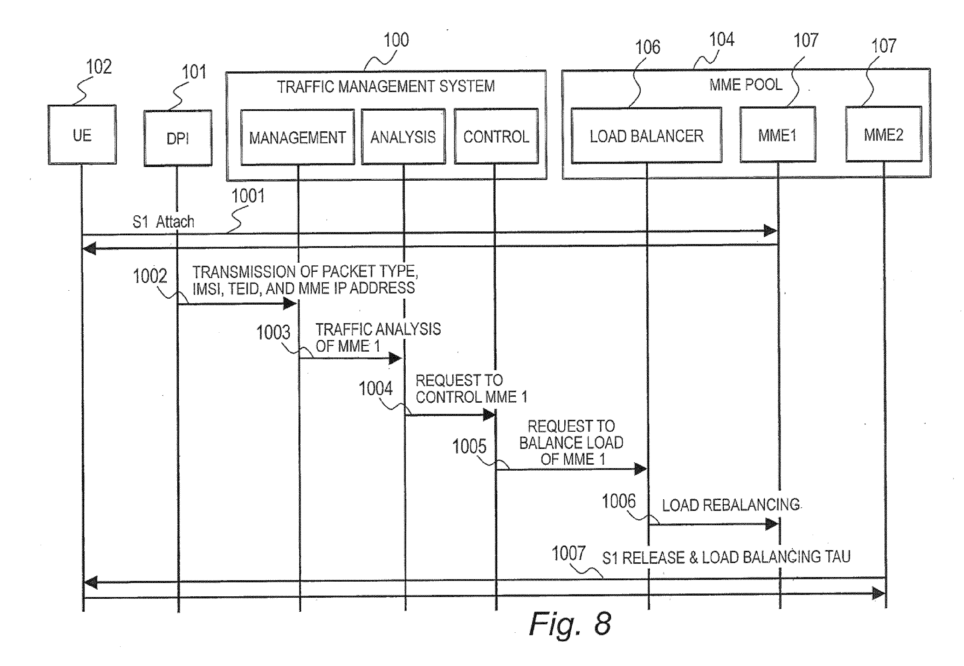

FIG. 8 is a sequence diagram for illustrating an example of MME load prediction/control processing that is executed when the input rate is equal to or more than the control threshold in the first embodiment.

In FIG. 8, processing steps up through the determination about whether to control the MME 1, which is made by the traffic analyzing function, are executed as in FIG. 7. When the input rate is equal to or more than the control threshold, it means that there is congestion, and the traffic analyzing function accordingly transmits to the control calculation function a request to control the MME 1 (1004).

The control calculation function calculates the load balancing proportion of the MMEs 107, and transmits to the load balancer 106 a request to balance the load of the MME 1 (107) (1005).

The load balancer 106 controls the load on the MME 1 by executing control so that an MME 2 takes over the UE 102 from the MME 1 (1006). A load balancing method prescribed by the 3GPP standards involves load rebalancing, S1 release, and load balancing TAU processing (1007). Other load balancing methods may be used, but details thereof are not described in this embodiment.

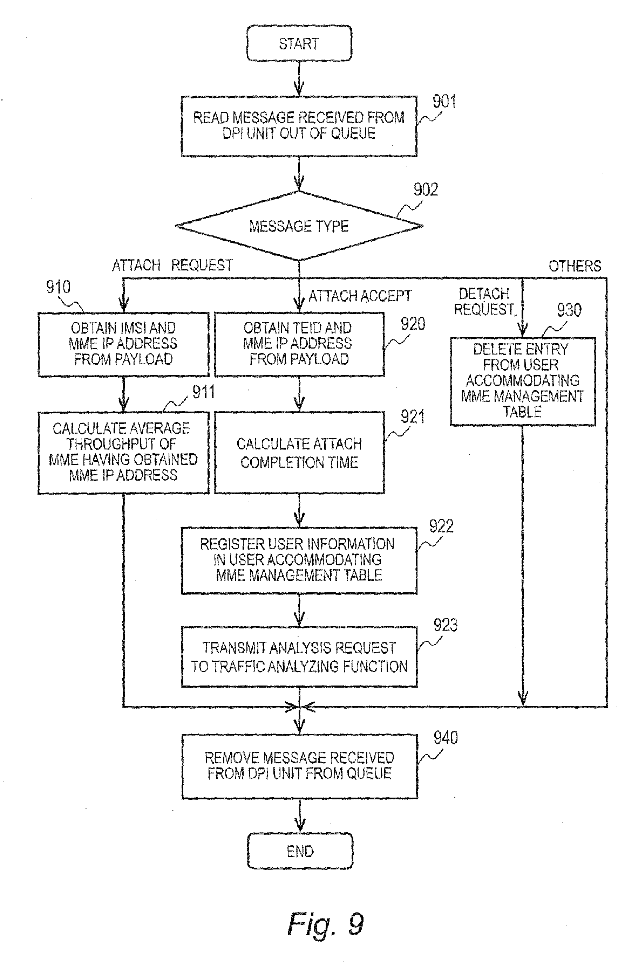

FIG. 9 is a flowchart for illustrating an example of processing executed by the user accommodating MME management function.

The TMS 100 receives a packet from the DPI unit 101 and stores the received packet in an internal queue.

In the case where there is at least one packet stored in the queue, the user accommodating MME management function of the TMS 100 starts processing in which the received packet is an argument.

The user accommodating MME management function first reads the packet received from the DPI unit 101 out of the queue (901).

The user accommodating MME management function next refers to the S1 AP packet format of the packet (message) to determine the type of the message, and the sequence branches as follows depending on the message type (902).

When the message type is "Attach Request", the IMSI and the MME IP address are obtained from the payload (910). The number of Attach messages input per unit time to the MME 107 for which coupling has been requested is multiplied by the size of the Attach messages to obtain a compiled data amount, and an average input rate is calculated from the compiled data amount (911). The average input rate can be calculated with the use of an exponentially weighted moving average. Using an exponentially weighted moving average reduces rapid changes in average input rate. The message received from the DPI unit 101 that has been obtained in Step 901 is then removed from the queue (940), and the processing is ended.

When it is determined in the condition determination of Step 902 that the message type is "Attach Accept", on the other hand, the TEID and the MME IP address are obtained from the payload (920), and an average value of Attach processing completion times that are associated with Attach messages within a given period of time is calculated (921). User information is registered in the user accommodating MME management table 320 (922). An analysis request including the MME IP address of the MME to be analyzed, and current average input rate information and Attach processing completion time of the MME is transmitted to the traffic analyzing function (923). The message received from the DPI unit 101 that has been obtained in Step 901 is then removed from the queue (940), and the processing is ended. The average value of Attach processing completion times can be calculated with the use of an exponentially weighted moving average. Using an exponentially weighted moving average reduces rapid changes in average value of session completion times.

When it is determined in the condition determination of Step 902 that the message type is "Detach Request", a relevant entry is deleted from the user accommodating MME management table 320 (930), the message received from the DPI unit 101 that has been obtained in Step 901 is removed from the queue (940), and the processing is ended.

Examples of the traffic analyzing function are described below. In a first example of the traffic analyzing function, the sign inflection point is detected in a normal state with no congestion that is illustrated in FIG. 2, namely, a state where the input rate is low and does not reach the sign inflection point.

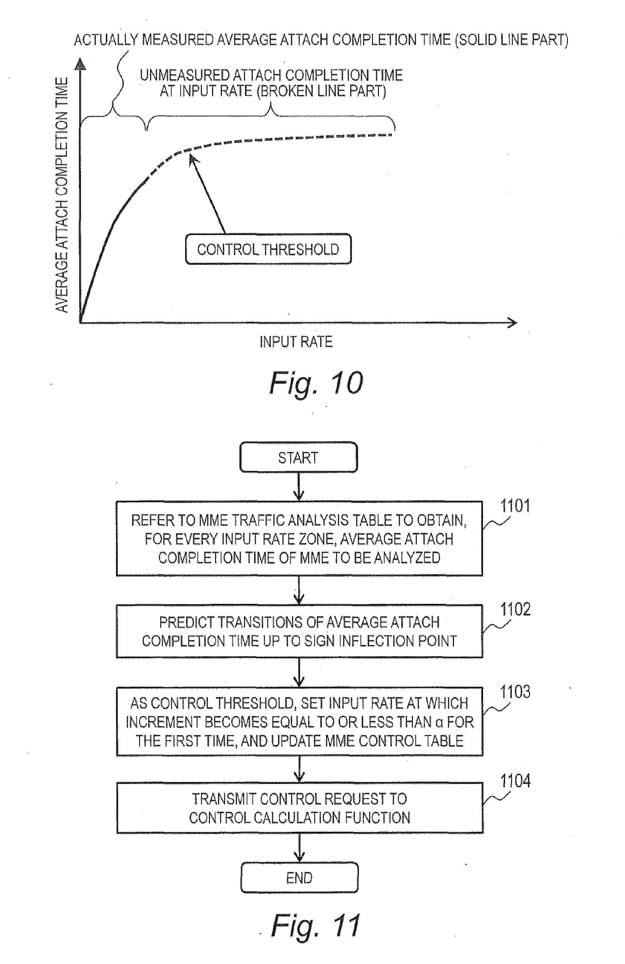

FIG. 10 is a diagram illustrating an example in which the traffic analyzing function predicts congestion by a slope supplementing method.

As illustrated in FIG. 10, the traffic analyzing function predicts the slope of a broken line part, which indicates an average Attach completion time of the input rate that has not been measured, based on the slope of a solid line part, which indicates an average Attach completion time of the low input rate that has actually been measured.

Based on the prediction, the traffic analyzing function sets an input rate at which the slope becomes gentler than a given threshold α for the first time as the control threshold for controlling congestion at an early stage.

FIG. 11 is a flowchart for illustrating an example of processing executed by the traffic analyzing function with the use of the slope supplementing method.

The traffic analyzing function starts the processing with an analysis request that is received from the user accommodating MME management function as a trigger. The traffic analyzing function executes the processing by using as an argument the IP address of an MME to be analyzed, and the current average input rate and Attach processing completion time of the MME.

Starting the processing, the traffic analyzing function refers to the traffic analysis table 321 to obtain, for every input rate zone of the MME in question, average Attach completion time information (1101). In Step 1101, the Attach processing completion time received from the user accommodating MME management function and an Attach processing completion time in an input rate zone to which the current average input rate belongs are averaged to calculate a new average Attach processing completion time as history information. The average Attach processing completion time can be calculated by, for example, a method that uses an exponentially weighted moving average, or other methods. In the case where no Attach processing completion time has been registered in the history information, it means that the received Attach processing completion time is the one measured for the first time for the input rate zone to which the current average input rate belongs, and the Attach processing completion time received from the user accommodating MME management function is therefore set as it is.

The average Attach completion times of the respective input rate zones are used to calculate an average Attach completion time transition curve up to the sign inflection point (1102). The average Attach completion time transition curve can be calculated by predicting, with the use of transitions in the increment of the average Attach completion time, an average Attach completion time of a higher input rate zone that has not been obtained.

An example is given in which, as illustrated in FIG. 5, an MME having an IP address "192.168.0.1" is measured to have an average Attach completion time "0.5 seconds" in an input rate zone "0 to 5 Mbits/s", an average Attach completion time "1.5 seconds" in an input rate zone "5 to 10 Mbits/s", an average Attach completion time "2.0 seconds" in an input rate zone "10 to 15 Mbits/s", and an average Attach completion time "2.25 seconds" in an input rate zone "15 to 20 Mbits/s", and average Attach completion times in input rate zones "20 to 25 Mbits/s"' and "25 to 30 Mbits/s" that have not been measured are obtained.

The increment of the average Attach completion time between the 0-5 Mbits/s zone and the 5-10 Mbits/s zone is 1.0 second. The increment of the average Attach completion time between the 5-10 Mbits/s zone and the 10-15 Mbits/s zone is 0.5 seconds. The increment of the average Attach completion time between the 10-15 Mbits/s zone and the 15-20 Mbits/s zone is 0.25 seconds. The increment of the average Attach completion time is therefore calculated to decrease to 0.5 times the previous value each time the input rate zone rises to the next higher zone. From this calculation result, the increment of the average Attach completion time in the subsequent input rate zone, the 20-25 Mbits/s zone, which has not been measured is calculated as 0.125 seconds, and the average Attach completion time in the 20-25 Mbits/s zone is predicted as 2.375 Mbits/s by adding the calculated increment to the average Attach completion time in the 15-20 Mbits/s zone. The increment of the average Attach completion time in the input rate zone "25-30 Mbits/s" is further calculated to be 0.0625 seconds, and the average Attach completion time in the 25-30 Mbits/s zone is predicted as 2.4375 Mbits/s by adding the calculated increment to the average Attach completion time in the 20-25 Mbits/s zone. This calculation is performed for every input rate zone to predict an average Attach completion time in each input rate zone.

The traffic analyzing function next executes equilibrium point detecting processing for detecting an input rate where the increment becomes equal to or lower than the threshold α for the first time, based on the average Attach completion times of all input rate zones, and sets the detected input rate as the control threshold to update the control threshold in the MME control table 322 (1103). By detecting the equilibrium point, a point where the degree of increase of the average Attach completion time becomes gentle can be predicted and detected. The threshold α is a parameter set by a network administrator. The threshold α may be set to, for example, a quarter of one second, i.e., 0.25 seconds, because the Attach completion time is on the order of several seconds to several ten seconds when traffic is congested. Other arbitrary values than this may also be set as the threshold α.

In the first example, when α is 0.25 seconds, the corresponding input rate zone is the 15-20 Mbits/s zone, and 15 Mbits/s is set as the control threshold. The traffic analyzing function then registers "15 Mbits/s" as the control threshold in an entry of the MME control table 322 where the MMI IP address is "192.168.0.1".

The traffic analyzing function next transmits the IP address and current input rate of the MME for which load balancing is to be executed to the control calculation function in order to request load balancing control (1104), and ends the processing.

With the traffic analyzing function that uses the slope supplementing method, an average Attach completion time can be predicted from average Attach completion times measured in the past. In addition, future congestion and ultimately the inflection point can be predicted even in a normal state where the current input rate is less than the inflection point, and a control threshold for detecting a sign of congestion can be calculated in advance even before congestion occurs.

A method of setting the control threshold by an inflection point detecting method is described as a second example of the traffic analyzing function.

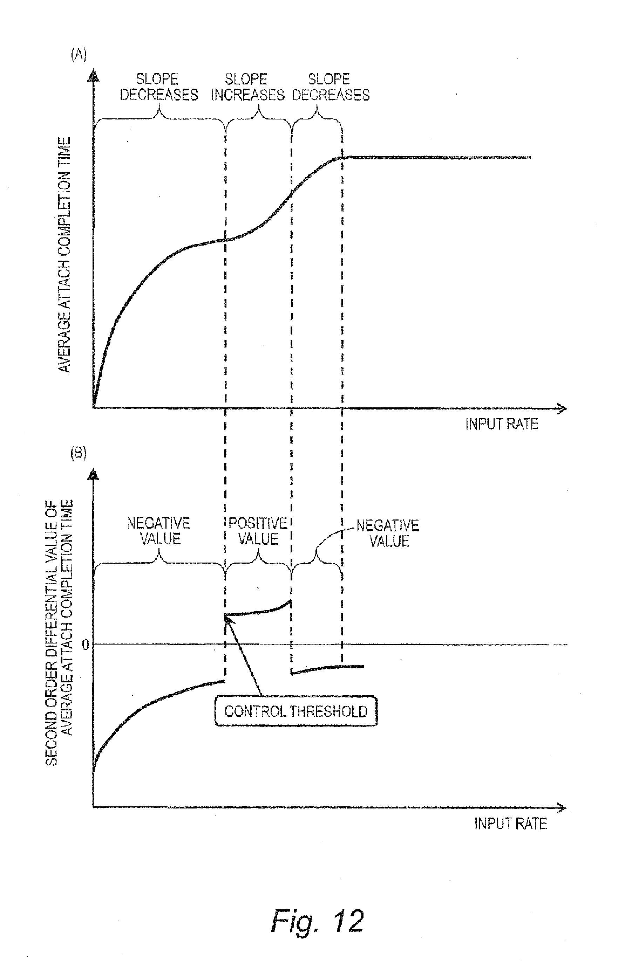

FIG. 12is a diagram illustrating an example in which the traffic analyzing function predicts congestion by the inflection point detecting method.

As illustrated in FIG. 12, the inflection point detecting method detects an inflection point in an average Attach completion time by calculating a second order differential value of actually measured average Attach completion times in relation to the input rate. When the input rate rises, the slope of the average Attach completion time past an inflection point changes from a downward trend to an upward trend and then to a downward trend. With those changes in average Attach completion time, a second order differential value of the average Attach completion time changes from a negative value to a positive value and then to a negative value. This characteristic is utilized in setting as the control threshold an input rate at which the second order differential value changes from a negative value to a positive value for the first time.

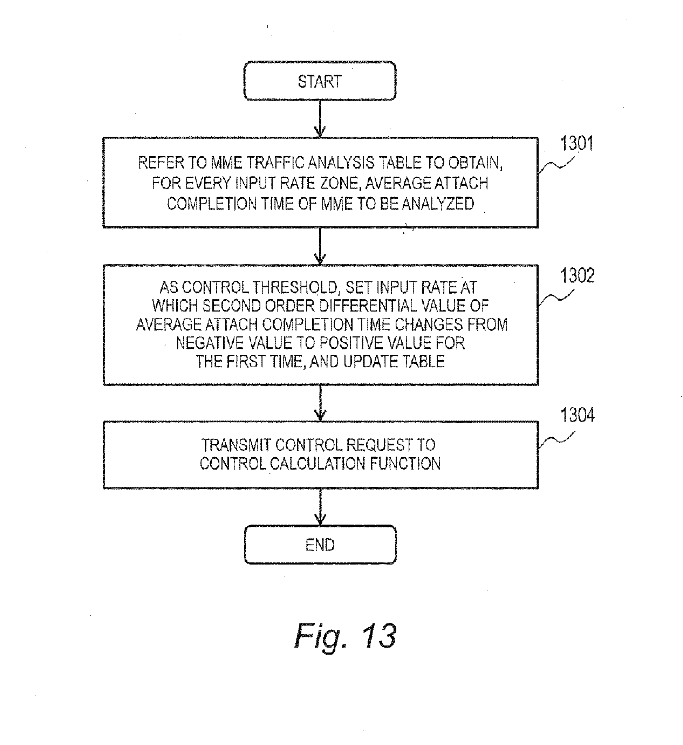

FIG. 13 is a flowchart for illustrating an example of processing executed by the traffic analyzing function with the use of the inflection point detecting method.

The traffic analyzing function starts the processing with an analysis request that is received from the user accommodating MME management function as a trigger. The traffic analyzing function executes the processing by using as an argument the IP address of an MME to be analyzed, and the current average input rate and Attach processing completion time of the MME.

Starting the processing, the traffic analyzing function refers to the traffic analysis table 321 to obtain, for every input rate zone of the MME in question, the average Attach completion time (1301). The Attach processing completion time received from the user accommodating MME management function and an Attach processing completion time in an input rate zone to which the current average input rate belongs are averaged to calculate a new average Attach processing completion time as history information. The average Attach processing completion time can be calculated by, for example, a method that uses an exponentially weighted moving average, or other methods. In the case where no Attach processing completion time has been registered in the history information, it means that the received Attach processing completion time is the one measured for the first time for the input rate zone to which the current average input rate belongs, and the Attach processing completion time received from the user accommodating MME management function is therefore set as it is.

The traffic analyzing function next calculates a second order differential value of average Attach completion times that are registered in the traffic analysis table 321 on an input rate zone-by-input rate zone basis, and detects an input rate at which the calculated second order differential value changes from a negative value to a positive value for the first time (hereinafter referred to as inflection point detection). The detected input rate is set as the control threshold, and the control threshold in the MME control table 322 is updated (1302).

An example is given in which, as illustrated in FIG. 5, the MME having an IP address "192.168.0.1" is measured to have an average Attach completion time "0.5 seconds" in an input rate zone "0 to 5 Mbits/s", an average Attach completion time "1.5 seconds" in an input rate zone "5 to 10 Mbits/s", an average Attach completion time "2.0 seconds" in an input rate zone "10 to 15 Mbits/s", and an average Attach completion time "2.25 seconds" in an input rate zone "15 to 20 Mbits/s", and average Attach completion times in input rate zones "20 to 25 Mbits/s" and "25 to 30 Mbits/s" that have not been measured are obtained.

The difference between the average Attach completion time between the 0-5 Mbits/s zone and the 5-10 Mbits/s zone is 1.0 second. The difference between the average Attach completion time between the 5-10 Mbits/s zone and the 10-15 Mbits/s zone is 0.5 seconds. The difference between the average Attach completion time between the 10-15 Mbits/s zone and the 15-20 Mbits/s zone is 0.25 seconds. The second order differential value is further calculated from those differences. A second order differential value in the 0-5 Mbits/s zone, the 5-10 Mbits/s zone, and the 10-15 Mbits/s zone is calculated as -0.5 seconds by subtracting 1.0 second from 0.5 seconds. A second order differential value in the 5-10 Mbits/s zone, the 10-15 Mbits/s zone, and the 15-20 Mbits/s zone is calculated as -0.25 seconds by subtracting 0.5 seconds from 0.25 seconds. This calculation is performed for every input rate zone to calculate second order differential values of average Attach completion times in all input rate zones.

The traffic analyzing function next transmits the IP address and current input rate of the MME for which load balancing is to be executed to the control calculation function in order to request load balancing control (1304), and ends the processing.

The traffic analyzing function that uses the inflection point detecting method predicts congestion from an inflection point in input rate, and can accordingly detect a sign of congestion with precision.

One of or both of the slope supplementing method and the inflection point detecting method can be employed in the first embodiment.

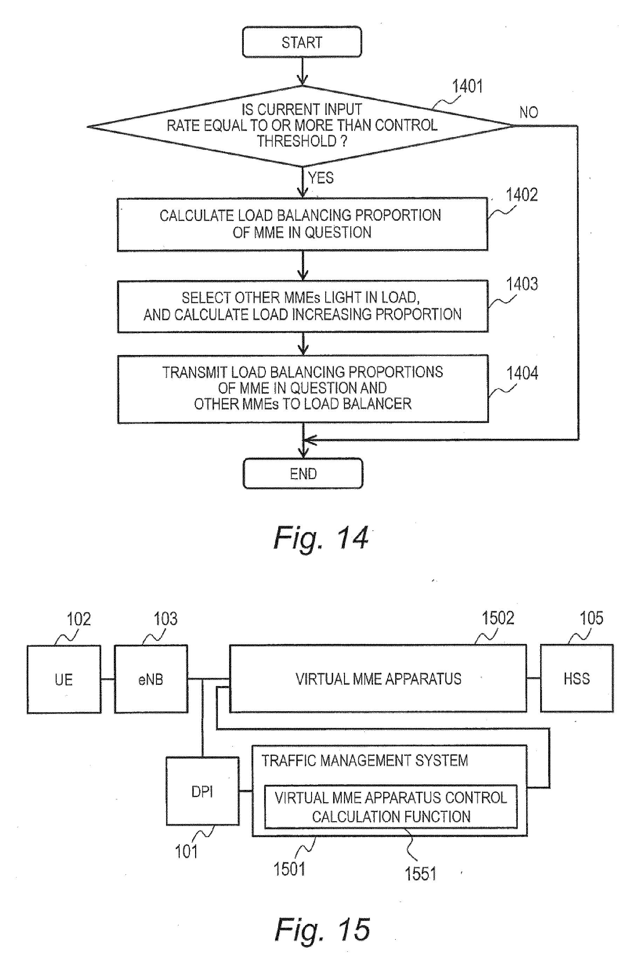

FIG. 14 is a flowchart for illustrating an example of processing executed by the control calculation function.

The control calculation function of the TMS 100 starts the processing with a load balancing request that is received from the traffic analyzing function, or the end of control of the control calculation function, as a trigger. The control calculation function executes the processing by using as an argument the IP address of an MME that is requested to be controlled and that is to be reduced in congestion, and the current input rate of the MME.

The control calculation function first determines whether or not the current input rate is equal to or more than the control threshold (1401). Specifically, the control calculation function compares the current input rate of the MME in question with the control threshold of the MME that is read out of the MME control table 322 (1401).

When it is determined in Step 1401 that the current input rate is equal to or more than the control threshold, the control calculation function calculates the load balancing proportion of the MME in question (hereinafter referred to as load lightening target MME) (1402). The load balancing proportion is expressed as the proportion of the number of pieces of UE 102 that are accommodated by the load lightening target MME after load lightening control to the number of pieces of UE 102 that are currently accommodated by the load lightening target MME. A value set by the administrator can be used as the load balancing proportion. The load balancing proportion of the load lightening target MME can be set to, for example, 80 percent. Other arbitrary values than this may also be set as the load balancing proportion.

The control calculation function next selects MMEs that are lighter in load out of all MMEs, and calculates the load increasing proportion of the selected MMEs (1403). For example, the load on the load lightening target MME is reduced from 100 percent to 80 percent and 20 percent of load to be balanced is allocated evenly to the other MMEs, thereby increasing the load on the other MMEs.

The control calculation function next transmits the load balancing proportions of the load lightening target MME and the other MMEs to the load balancer 106 (1404), and ends the processing.

When it is determined in Step 1401 that the current input rate is less than the control threshold, on the other hand, load balancing control is unnecessary, and the processing is therefore ended.

As described above, the first embodiment includes measuring the throughput of coupling request messages from cellular phone terminals and the time required to complete coupling request processing, accumulating the throughput and the completion time as a history, and predicting a coupling request processing completion time based on a change in the slope (the degree of increase) of the coupling request processing completion time in relation to the input rate of coupling requests. A coupling processing request completion time in the future can be predicted accurately in this manner. In addition, the utilization ratio of network resources can be predicted based on the prediction of the coupling request processing completion time, which makes it possible to investigate the need for expanding the network facilities.

The first embodiment further includes predicting congestion in an MME based on a change in the slope of the coupling request processing completion time, setting the control threshold based on the prediction result in, and, in the case where the throughput of coupling request messages reaches the control threshold, balancing the load on the MME. This prevents the timeout of a coupling request from a subscriber terminal in which the subscriber terminal cannot start communication.

Future congestion can also be predicted in the first embodiment where a point at which the slope of the coupling request processing completion time exceeds the given threshold α for the first time is determined as a sign of congestion.

The first embodiment is capable of predicting congestion accurately because a point at which a value obtained through second order differential of the coupling request processing completion time by the throughput of coupling request messages changes from a negative value to a positive value for the first time is determined as a sign of congestion.

### Second Embodiment

In a second embodiment of this invention, the method, apparatus, and system of the first embodiment are combined with a virtualization platform to build a system that raises the apparatus utilization ratio while balancing load among MMEs by detecting a sign of congestion.

The virtualization platform is, for example, a platform disclosed in US 6,397,242 B1, and has a function of executing functions of a plurality of apparatus virtually on a single apparatus. The virtualization platform may be implemented by other methods of a different virtualization granularity, such as a method disclosed in Whitaker, A., et al, "Denali: Lightweight Virtual Machines for Distributed and Networked Applications", University of Washington Technical Report 02-02-01, 2002. The virtualization platform can be implemented by any method and any virtualization granularity can be used in this embodiment.

FIG. 15 is a diagram for illustrating the configuration of a network according to the second embodiment.

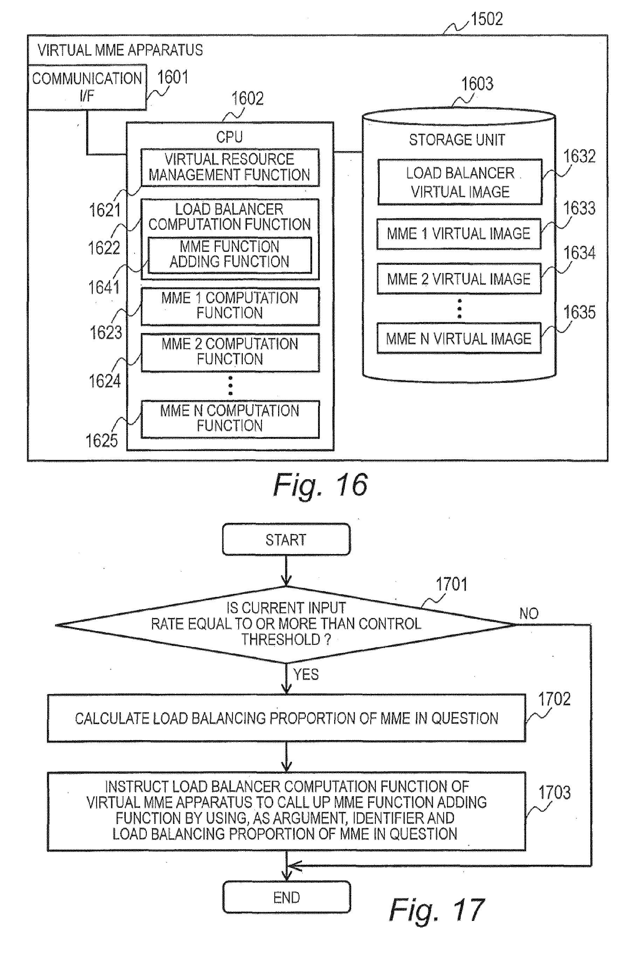

In the second embodiment, a virtual MME apparatus 1502 is provided in place of the MME pool 104 of the first embodiment. A traffic management system 1501 for the virtual MME apparatus is provided in place of the traffic management system 100 of the first embodiment. The traffic management system 1501 has a virtual MME apparatus control calculation function 1551, which gives an instruction to a load balancer computation function 1622 of the virtual MME apparatus 1502, which is illustrated in FIG. 16. The rest of the apparatus and configuration is the same as in the first embodiment, and a description thereof is therefore omitted here. The following description is centered around a difference between the MME pool 104 and the virtual MME apparatus 1502, and a difference between the traffic management system 100 and the virtual MME apparatus control calculation function 1551.

FIG. 16 is an illustration of a configuration example of the virtual MME apparatus 1502 according to the second embodiment.

The virtual MME apparatus 1502 is installed in a general computer, and includes a communication interface 1601, a CPU 1602, and a storage unit 1603.

The communication interface 1601 is a network interface apparatus that controls communication to and from other apparatus (the eNB 103, the traffic management system 1501, the HSS 105, and the like) by following a given protocol.

The CPU 1602 implements functions of the virtual MME apparatus 1502 (a virtual resource management function 1621, the load balancer computation function 1622, and MME computation functions 1623 to 1625) by executing a program that is stored in a memory. The MME computation functions 1623 to 1625 may instead be a single MME computation function, two MME computation functions, or four or more MME computation functions, depending on how many MMEs 107 are installed in the system.

The virtual resource management function 1621 uses a known method to manage the virtualization platform, and provides a virtual apparatus by way of a virtual image in the storage unit 1603 in response to a request. A known virtualization method can be employed for the virtual resource management function 1621 as described above.

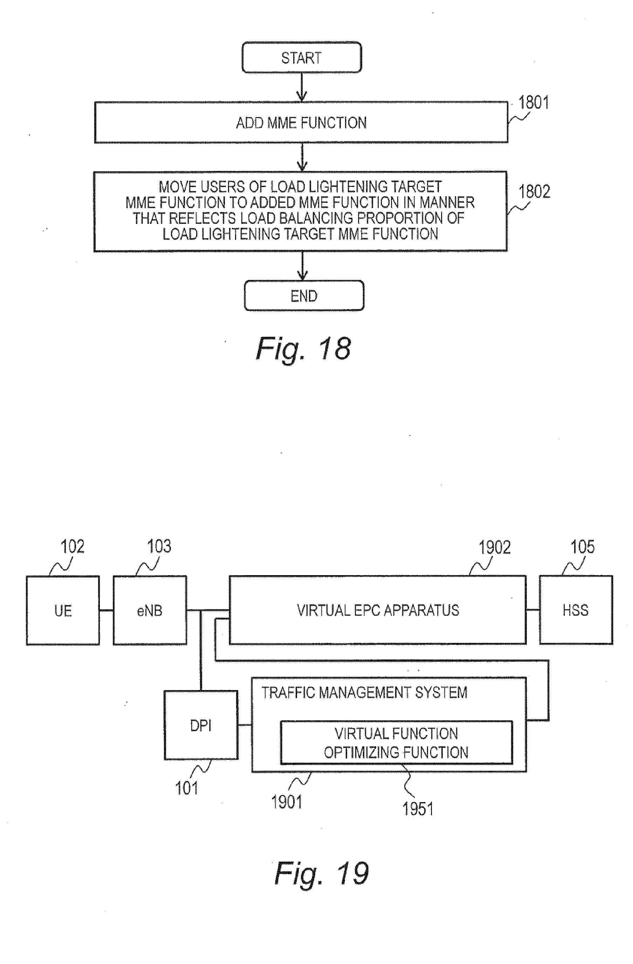

The load balancer computation function 1622 assigns, as a virtual load balancer apparatus, processing to the plurality of MME computation functions, here, 1623 to 1625. The load balancer computation function 1622 is obtained by adding an MME function adding function 1641 to the load balancer 106 of the first embodiment. The MME function adding function 1641 is described later with reference to FIG. 18.

The MME computation functions 1623 to 1625 are virtual MME apparatus that have the same function as that of the MMEs 107 of the first embodiment.

The storage unit 1603 includes a large-capacity, non-volatile storage apparatus such as a magnetic storage apparatus (HDD) or a flash memory (SSD) to hold virtual images 1632 to 1635. The storage unit 1603 also stores programs executed by the CPU 1602 and data used when the programs are executed. In other words, the programs are read out of the storage unit 1603, loaded onto the memory, and executed by the CPU 1602.

The programs executed by the CPU 1602 are provided to the virtual MME apparatus 1502 via a removable medium (a CD-ROM, a flash memory, or the like), or via a network, to be stored in the storage unit 1603 that is a non-transitory storage medium. It is therefore preferred for the virtual MME apparatus 1502 to have an interface for reading data out of removable media.

The traffic management system 1501 of the second embodiment is obtained by installing the control calculation function of the traffic management system 100 of the first embodiment as the virtual MME apparatus control calculation function 1551. The rest of the configuration and function of the traffic management system 1501 is the same as that of the traffic management system 100 of the first embodiment.

The specifics of processing executed by the virtual MME apparatus control calculation function 1551 are described next with reference to FIG. 17.

FIG. 17 is a flowchart for illustrating an example of processing executed by the virtual MME apparatus control calculation function 1551 according to the second embodiment.

The processing of the virtual MME apparatus control calculation function 1551 is similar to the processing executed by the control calculation function 306 of the first embodiment, which is illustrated in FIG. 14, but includes a step of transmitting an instruction to the virtual MME apparatus 1502.

The virtual MME apparatus control calculation function 1551 first determines whether or not the current input rate is equal to or more than the control threshold (1701), and calculates the load balancing proportion of the load lightening target MME (1702). Steps 1701 and 1702 are the same as Steps 1401 and 1402 described above.

Thereafter, the virtual MME apparatus control calculation function 1551 instructs the load balancer computation function 1622 of the virtual MME apparatus 1502 to call up the MME function adding function 1641, with the identifier of the load lightening target MME and the load balancing proportion of the MME as an argument (1703). The identifier of the load lightening target MME is an identifier for uniquely identifying which MME computation function is executed virtually within the virtual MME apparatus 1502, and can be an IP address as an MME IP address is used in Step 1401 of FIG. 14.

FIG. 18 is a flowchart for illustrating an example of processing executed by the MME function adding function 1641 according to the second embodiment.

The MME function adding function 1641 starts the processing with the calling up of the MME function adding function 1641, which is illustrated in Step 1703 of FIG. 17, as a trigger. The MME function adding function 1641 executes the processing by using as an argument the identifier and load balancing proportion of an MME function that is to be lightened in load (hereinafter referred to MME function A).

The MME function adding function 1641 first adds an MME function (1801). Specifically, the MME function adding function 1641 creates a copy of one of the MME virtual images kept within the storage unit 1603 of the virtual MME apparatus 1502, and assigns a new MME identifier to the created copy. The virtual resource management function 1621 executes the copy of the virtual image. The MME function added in Step 1801 is hereinafter referred to as MME function B.

The MME function adding function 1641 next moves users of the MME function A to the MME function B in a manner that reflects the load balancing proportion of the MME function A (1802), and ends the processing.

As described above, the second embodiment uses the virtual MME apparatus 1502 and the traffic management system 1501, thereby balancing load among MMEs and raising the apparatus utilization ratio even in a virtual environment.

In addition, in the second embodiment where an MME function is added in the virtual MME apparatus 1502, load can be balanced without affecting other MMEs and the number of MMEs can be controlled appropriately in a manner that suits the state of the network.

### Third Embodiment

In a third embodiment of this invention, the method, apparatus, and system of the second embodiment are combined with MMEs that are components of the Evolved Packet Core (EPC) and a virtualization platform for virtualizing a service gateway (S-GW) to build a system that raise the apparatus utilization ratio while balancing load among MMEs by detecting a sign of congestion.

The virtualization platform is, for example, a platform disclosed in US 6,397,242 B1, and has a function of executing functions of a plurality of apparatus virtually on a single apparatus. The virtualization platform may be implemented by other methods of a different virtualization granularity, such as the method disclosed in "Denali: Lightweight Virtual Machines for Distributed and Networked Applications". The virtualization platform can be implemented by any method and any virtualization granularity can be used in this embodiment.

FIG. 19 is a diagram for illustrating the configuration of a network according to the third embodiment.

In the third embodiment, a virtual EPC apparatus 1902 is provided in place of the virtual MME apparatus 1502 of the second embodiment. The rest of the apparatus and configuration is the same as in the second embodiment, and a description thereof is therefore omitted here. The following description is centered around a difference between the virtual MME apparatus 1502 and the virtual EPC apparatus 1902.

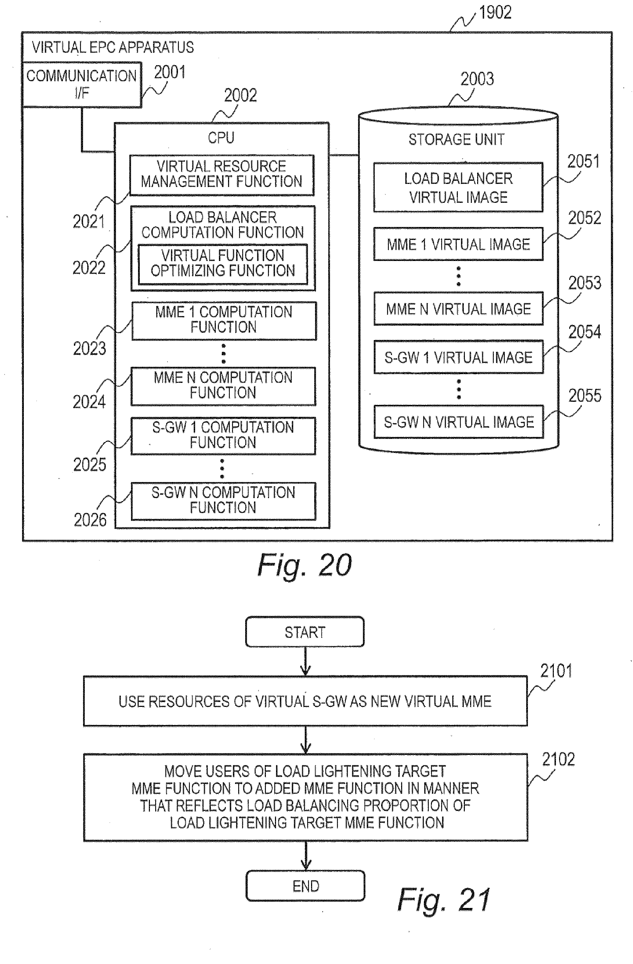

FIG. 20 is a diagram illustrating a configuration example of the virtual EPC apparatus 1902 according to the third embodiment.

The virtual EPC apparatus 1902 is installed in a general computer, and includes a communication interface 2001, a CPU 2002, and a storage unit 2003.

The communication interface 2001 is a network interface apparatus that controls communication to and from other apparatus (the eNB 103, the traffic management system 1501, the HSS 105, and the like) by following a given protocol.

The CPU 2002 implements functions of the virtual EPC apparatus 1902 (a virtual resource management function 2021, a load balancer computation function 2022, MME computation functions 2023 and 2024, and S-GW computation functions 2025 and 2026) by executing a program that is stored in a memory. The MME computation functions 2023 and 2024 may instead be a single MME computation function or three or more MME computation functions, depending on how many MMEs 107 are installed in the system. The S-GW computation functions 2025 and 2026 may instead be a single S-GW computation function or three or more S-GW computation functions, depending on how many S-GWs are installed in the system.

The virtual resource management function 2021 uses a known method to manage the virtualization platform, and provides a virtual apparatus by way of a virtual image in the storage unit 2003 in response to a request. A known virtualization method can be employed for the virtual resource management function 2021 as described above.

The load balancer computation function 2022 assigns, as a virtual load balancer apparatus, processing to the plurality of MME computation functions, here, 2023 and 2024, and the plurality of S-GW computation functions, here, 2025 and 2026. The load balancer computation function 2022 has a virtual function optimizing function in place of the MME function adding function 1641 of the load balancer computation function 1622 of the second embodiment.

The MME computation functions 2023 and 2024 are virtual MME apparatus that have the same function as that of the MME computation functions 1623 to 1625 of the second embodiment.

The S-GW computation functions 2025 and 2026 are virtual S-GW apparatus that have a service gateway function in the EPC.

The storage unit 2003 includes a large-capacity, non-volatile storage apparatus such as a magnetic storage apparatus (HDD) or a flash memory (SSD) to hold virtual images 2051 to 2055. The storage unit 2003 also stores programs executed by the CPU 2002 and data used when the programs are executed. In other words, the programs are read out of the storage unit 2003, loaded onto the memory, and executed by the CPU 2002.

The programs executed by the CPU 2002 are provided to the virtual EPC apparatus 1902 via a removable medium (a CD-ROM, a flash memory, or the like), or via a network, to be stored in the storage unit 2003 that is a non-transitory storage medium. It is therefore preferred for the virtual EPC apparatus 1902 to have an interface for reading data out of removable media.

The traffic management system 1901 of this embodiment is the same as the traffic management system 1501 of the second embodiment, except that a virtual function optimizing function 1951 is included. The rest of the configuration and function is the same as that of the traffic management system 100 of the first embodiment.

The specifics of processing executed by the virtual resource management function 2021 of the virtual EPC apparatus 1902 are described next with reference to FIG. 21.

FIG. 21 is a flowchart for illustrating an example of processing executed by the virtual resource management function 2021 according to the third embodiment.

The virtual resource management function 2021 starts the processing with the calling up of the virtual resource management function 2021, as a trigger. The virtual resource management function 2021 executes the processing by using as an argument the identifier and load balancing proportion of an MME function that is to be lightened in load (hereinafter referred to MME function A).

The virtual resource management function 2021 first uses resources of a virtual S-GW as a new virtual MME (2101). Specifically, the virtual resource management function 2021 changes one of S-GW virtual images 2054 and 2055 in the storage unit 2003 of the virtual EPC apparatus 1902 into an MME virtual image. The MME function newly generated in Step 2101 is hereinafter referred to as MME function B.

The virtual resource management function 2021 next moves users of the MME function A to the MME function B in a manner that reflects the load balancing proportion of the MME function A (2103) as in Step 1802 of FIG. 18, and then ends the processing.

As described above, the third embodiment uses the virtual EPC apparatus 1902, thereby balancing load among MMEs and raising the apparatus utilization ratio in a virtual environment that includes a virtual EPC apparatus.

This invention is not limited to the above-described embodiments but includes various modifications. The above-described embodiments are explained in details for better understanding of this invention and are not limited to those including all the configurations described above. A part of the configuration of one embodiment may be replaced with that of another embodiment; the configuration of one embodiment may be incorporated to the configuration of another embodiment. A part of the configuration of each embodiment may be added, deleted, or replaced by that of a different configuration.

The above-described configurations, functions, processing modules, and processing means, for all or a part of them, may be implemented by hardware: for example, by designing an integrated circuit.

The above-described configurations and functions may be implemented by software, which means that a processor interprets and executes programs providing the functions.

The information of programs, tables, and files to implement the functions may be stored in a storage device such as a memory, a hard disk drive, or an SSD (a Solid State Drive), or a storage medium such as an IC card, or an SD card.

The drawings illustrates control lines and information lines as considered necessary for explanation but do not illustrate all control lines or information lines in the products. It can be considered that almost of all components are actually interconnected.

## Claims

1. A traffic management system for managing traffic of a wireless network system,
the wireless network system including at least one call control apparatus for processing a connection request from a subscriber terminal,
the traffic management system (100) being configured to predict a connection request processing completion time required for the at least one call control apparatus to finish processing a connection request, based on a change in a slope of the connection request processing completion time in relation to a quantity of connection requests that are transferred from the subscriber terminals to the at least one call control apparatus.

2. The traffic management system according to claim 1,
wherein the wireless network system includes a plurality of call control apparatus, and a load balancer for controlling load on the plurality of call control apparatus, and
wherein the traffic management system (100) is configured to:
detect a sign of congestion in the plurality of call control apparatus based on the change in the slope of the connection request processing completion time; and
request the load balancer to balance load on the call control apparatus in a case of detecting the sign of congestion.

3. The traffic management system according to claim 2, wherein the traffic management system (100) is configured to detect a sign of congestion at a minimum connection request quantity point where the slope of the connection request processing completion time exceeds a predetermined threshold.

4. The traffic management system according to claim 2 or 3, wherein the traffic management system (100) is configured to detect a sign of congestion at a minimum connection request quantity point where a value calculated through second order differential of the connection request processing completion time by the quantity of connection requests changes from a negative value to a positive value.

5. The traffic management system according to at least one of claims 2 to 4,
wherein the plurality of call control apparatus configured with virtual call control apparatus that are variable in how many of the virtual call control apparatus are in operation, and
wherein, when detecting a sign of congestion in one of the virtual call control apparatus, the traffic management system (100) is configured to request the load balancer to distribute load on the one of the virtual call control apparatus in which the sign has been detected among other virtual call control apparatus.

6. The traffic management system according to claim 5, wherein, when detecting a sign of congestion in one of the virtual call control apparatus, the traffic management system is configured to request generation of a new virtual call control apparatus, and request the load balancer to distribute load on the one of the virtual call control apparatus in which the sign has been detected to the newly generated virtual call control apparatus.

7. The traffic management system according to at least one of claims 2 to 6,
wherein the plurality of call control apparatus configured with virtual call control apparatus that are variable in how many of the virtual call control apparatus are in operation,
wherein the wireless network system includes virtual gateway apparatus that are variable in how many of the virtual gateway apparatus are in operation, and
wherein, when detecting a sign of congestion in one of the virtual call control apparatus, the traffic management system is configured to request generation of a new virtual call control apparatus by changing one of the virtual gateway apparatus into the virtual call control apparatus, and request the load balancer to distribute load on the virtual call control apparatus in which the sign has been detected to the newly generated virtual call control apparatus.

8. A wireless network system which accommodates a subscriber terminal, comprising:
at least one call control apparatus for processing connection requests from the subscriber terminals;
a data analyzing apparatus for monitoring traffic of the wireless network system; and
a traffic management system (100) for managing traffic of the wireless network system,
wherein the data analyzing apparatus is configured to:
monitor connection requests that are transferred from the subscriber terminals to the at least one call control apparatus; and
transfer the monitored connection requests to the traffic management system, and
wherein the traffic management system (100) is configured to:
analyze a slope of a connection request processing completion time in relation to a quantity of connection request transferred from the subscriber terminals to the at least one call control apparatus with use of the connection requests monitored by the data analyzing apparatus; and
predict a connection request processing completion time required for the at least one call control apparatus to finish processing connection request based on a change in the analyzed slope of the connection request processing completion time.

9. The wireless network system according to claim 8, further comprising a plurality of call control apparatus, and a load balancer for controlling load on the plurality of call control apparatus, and
wherein the traffic management system (100) is configured to:
detect a sign of congestion in the plurality of call control apparatus based on the change in the slope of the connection request processing completion time; and
request the load balancer to balance load on the call control apparatus in a case of detecting the sign of congestion.

10. The wireless network system according to claim 9, wherein the traffic management system (100) is configured to detect a sign of congestion at a minimum connection request quantity point where the slope of the connection request processing completion time exceeds a predetermined threshold.

11. The wireless network system according to at least one of claims 9 to 10, wherein the traffic management system (100) is configured to detect a sign of congestion at α minimum connection request quantity point where a value calculated through second order differential of the connection request processing completion time by the quantity of connection requests changes from a negative value to a positive value.

12. The wireless network system according to at least one of claims 9 to 11,
wherein the plurality of call control apparatus configured with virtual call control apparatus that are variable in how many of the virtual call control apparatus are in operation, and
wherein, when detecting a sign of congestion in one of the virtual call control apparatus, the traffic management system (100) is configured to request the load balancer to distribute load on the one of the virtual call control apparatus in which the sign has been detected among other virtual call control apparatus.

13. The wireless network system according to claim 12, wherein, when detecting a sign of congestion in one of the virtual call control apparatus, the traffic management system (100) is configured to request generation of a new virtual call control apparatus, and request the load balancer to distribute load on the one of the virtual call control apparatus in which the sign has been detected to the newly generated virtual call control apparatus.

14. The wireless network system according to at least one of claims 9 to 13,
wherein the plurality of call control apparatus configured of virtual call control apparatus that are variable in how many of the virtual call control apparatus are in operation,
wherein the wireless network system (100) comprises virtual gateway apparatus that are variable in how many of the virtual gateway apparatus are in operation, and
wherein, when detecting a sign of congestion in one of the virtual call control apparatus, the traffic management system is configured of request generation of a new virtual call control apparatus by changing one of the virtual gateway apparatus into the virtual call control apparatus, and requests the load balancer to distribute load on the virtual call control apparatus in which the sign has been detected to the newly generated virtual call control apparatus.
